# EUROPEAN PATENT APPLICATION

(11) **EP 4 527 646 A1**
(43) Date of publication of application: **26.03.2025**
(21) Application number: 23815127.8
(22) Date of filing: 29.05.2023
(51) Int. Cl.: B60H 1/00, B60H 1/22

(54) **PTC HEATER, METHOD FOR CONTROLLING PTC HEATER, AND CONTROL SYSTEM FOR PERFORMING METHOD**

(30) Priority: 30.05.2022 CN 202210604721
(71) Applicant: Dometic Sweden AB, 171 54 Solna (SE); Dometic (Zhuhai) Technology Co., Ltd., Zhuhai, Guangdong 519041 (CN)
(72) Inventor: WANG, Zhe, Zhuhai, Guangdong 519041 (CN); LI, Peng, Zhuhai, Guangdong 519041 (CN); XIE, Wenbo, Zhuhai, Guangdong 519041 (CN)
(74) Representative: Grosse Schumacher Knauer von Hirschhausen
(86) International application number: PCT/CN2023/096748
(87) International publication number: WO 2023/231944

(57) **Abstract**

A PTC heater (1) for use in a vehicle air conditioner. The PTC heater (1) comprises a plurality of independently electrically controllable PTC modules (11, 12, and 13) that can be selected. All the PTC modules (11, 12 and 13) are directly started simultaneously to activate the entire PTC heater (1); or the operation of one or some of the PTC modules (11, 12, and 13) is started before all the PTC modules (11, 12 and 13) are started simultaneously to activate the entire PTC heater (1). In addition, a method for controlling the PTC heater (1) and a control system for operating the control method are also provided. By controlling the coordinated operation of the PTC heater and a compressor, the purposes of reducing power consumption to increase energy efficiency and extending the range of an electric bus are achieved.

## Description

### TECHNICAL FIELD

The present invention relates to the technical field of air conditioners, and in particular to vehicle air conditioners, including split vehicle air conditioners or integrated vehicle air conditioners, such as a backpack-type air conditioner arranged at the rear of a vehicle or at a luggage rack at a lower portion of the vehicle, or a roof-mounted air conditioner. More specifically, the present invention relates to a PTC heater for use in a vehicle air conditioner, a method for controlling the PTC heater, and a control system for performing the method.

### BACKGROUND

For a vehicle such as a recreational vehicle in the form of a van, a motorhome, a commercial vehicle, a camper van or a trailer, an air conditioner is usually mounted at the roof of the vehicle, at the rear of the vehicle, at a luggage rack at a lower portion of the vehicle, or another position to supply heated or cooled regulated air into the interior of the vehicle, in order to make the environment more comfortable for occupants. PTC heaters are used in such vehicle air conditioners to provide heated air to the interior of the vehicle due to their advantages of simple structure, long service life, high thermal efficiency, etc.

However, the operation of a PTC heater is severely affected by the ambient temperature. That is, the lower the ambient temperature, the lower the resistance value of the PTC heater. When starting the PTC heater at a relatively low ambient temperature, the starting current of the PTC heater increases significantly due to the low resistance value caused by the low ambient temperature. This may trigger the protection of the PTC heater (because the starting current exceeds a set protection current of the PTC heater), the heating function of the air conditioner cannot be activated normally, and a fuse of the vehicle may even be blown.

In the prior art, in order to reduce the starting current, one way is to introduce several boost circuits, but this will significantly increase the electrical control costs. Another way is to provide a PTC current protector, and deactivate the PTC heater when the current exceeds the limit of the PTC current protector. The PTC heater is activated and deactivated repeatedly to increase the temperature of the PTC itself, so that the PTC heater can be started normally. However, this repeated activation and deactivation will result in a poor user experience.

### SUMMARY

The technical problem to be solved by the present invention is to propose a PTC heater and a control method and control system thereof, which can reduce the starting current to avoid triggering protection, have a simple structure and control logic, are more cost-effective and have a better user experience, in view of the aforementioned drawbacks of the prior art.

To solve the technical problem mentioned above, the present invention uses the following technical solutions.

According to a first aspect of the present invention, a PTC heater for use in a vehicle air conditioner is provided, wherein the PTC heater may be arranged, for example, in an air conditioning unit, wherein the PTC heater comprises a plurality of independently electrically controllable PTC modules, to enable selectively:
directly starting all the PTC modules simultaneously to activate the entire PTC heater; or
starting the operation of one or some of the PTC modules before all the PTC modules are started simultaneously to activate the entire PTC heater.

The PTC heater according to the first aspect of the present invention comprises a plurality of independently electrically controllable PTC modules, so that the starting of the PTC heater can be selectively controlled according to specific circumstances. For example, at a low ambient temperature, instead of directly starting all the PTC modules simultaneously to activate the entire PTC heater, one or some of the PTC modules of the PTC heater are selected to be started first, and then all the PTC modules are started simultaneously to activate the entire PTC heater. The selection of the one or some of the PTC modules to be started first can avoid the protection shutdown of the PTC heater caused by excessive current during cold start and can also guarantee the heating and comfort requirements in the vehicle to some extent. The temperature of the started PTC module itself will also increase with operation (its resistance value increases) so that the current gradually decreases to achieve preheating of the PTC heater, and then when all the PTC modules are started simultaneously, the entire PTC heater can be activated without triggering over-current protection. The PTC heater according to the first aspect of the present invention achieve a reduction in starting current with a simple and more cost-effective PTC heater structure by dividing the plurality of independently electrically controllable PTC modules, to ensure normal activation of the PTC heater while providing a good user experience.

According to an implementation of the first aspect of the present invention, the number of modules of the PTC heater depends on the total power of the PTC heater, and a partial power of each PTC module is substantially the same or different.

According to an implementation of the first aspect of the present invention, the starting of the operation of each PTC module is controlled by a corresponding switch unit.

According to an implementation of the first aspect of the present invention, when the vehicle air conditioner is running a heating function, only the PTC heater is operated alone or the PTC heater is operated in conjunction with a heat exchanger in the vehicle air conditioner.

According to an implementation of the first aspect of the present invention, the combination of the plurality of PTC modules includes, but is not limited to: a combination in which the PTC modules are arranged in sequence in a transverse direction in a substantially block-like form, a combination in which the PTC modules are arranged in sequence in a vertical direction in a substantially block-like form, a combination in which the PTC modules are arranged in sequence in a longitudinal direction in a substantially block-like form, or the PTC modules extending in the transverse direction in a substantially spiral form. It should be understood that the transverse direction may be considered to be a substantially width direction of a roof-mounted unit (i.e. a direction extending substantially between left and right sides of the roof-mounted unit), the vertical direction may be considered to be a substantially height direction of the roof-mounted unit (i.e. a direction extending substantially between a top cover and a chassis of the roof-mounted unit), and the longitudinal direction may be considered to be substantially from the front/rear side to the rear/front side of the roof-mounted unit.

According to a second aspect of the present invention, a method for controlling the PTC heater according to the first aspect of the present invention is proposed, the method comprising:
measuring a vehicle interior temperature value Ti;
comparing the measured vehicle interior temperature value Ti with a set temperature threshold T0; and
starting the operation of one or some of PTC modules before all the PTC modules are started simultaneously to activate the entire PTC heater if the measured vehicle interior temperature value Ti is determined to be equal to or less than the set temperature threshold T0.

In the method for controlling the PTC heater according to the second aspect of the present invention, by determining that the vehicle interior temperature is equal to or less than a threshold, it is determined that the ambient temperature at which the PTC heater is located is at a low level, and control is performed such that instead of directly starting all the PTC modules simultaneously to activate the entire PTC heater, one or some of the PTC modules of the PTC heater are selected to be started first, and then all the PTC modules are started simultaneously to activate the entire PTC heater. The selection of the one or some of the PTC modules to be started first can avoid the protection shutdown of the PTC heater caused by excessive current during cold start and can also guarantee the heating and comfort requirements in the vehicle to some extent. The temperature of the started PTC module itself will also increase with operation (its resistance value increases) so that the current gradually decreases to achieve preheating of the PTC heater, and then when all the PTC modules are started simultaneously, the entire PTC heater can be activated without triggering over-current protection. The method for controlling the PTC heater according to the second aspect of the present invention controls the starting and operation of different PTC modules by confirming low ambient temperature conditions based on the temperature comparison, thereby achieving a reduction in starting current with a simple and more cost-effective control logic, to ensure normal activation of the PTC heater while providing a good user experience.

According to an implementation of the second aspect of the present invention, the temperature threshold is a temperature range with a lower bound value T1 and an upper bound value T2.

According to an implementation of the second aspect of the present invention, if it is determined that Ti is equal to or less than T1: where there are two PTC modules, one of the PTC modules is started and then operates for a period of time, and then it is determined whether the other PTC module can be started based on the operating current of the PTC module, if so, the other PTC module can be started to start both the PTC modules simultaneously to activate the entire PTC heater, otherwise, the other PTC module is started after the PTC module is further operated for a period of time, to start both the PTC modules simultaneously to activate the entire PTC heater; and where there are at least three PTC modules, after each of the PTC modules is sequentially started individually and then operates for a period of time, all the PTC modules are started simultaneously to activate the entire PTC heater.

According to an implementation of the second aspect of the present invention, if it is determined that Ti is less than T2 and greater than T1: where there are two PTC modules, one of the PTC modules is started and then operates for a period of time, and then the other PTC module is started to start both the PTC modules simultaneously to activate the entire PTC heater; and where there are at least three PTC modules, some of the PTC modules are started and then operate for a period of time, and then it is determined whether one or some of the other PTC modules can be started based on the operating current of the some of the PTC modules, if so, the one or some of the other PTC modules can be started, and then all the PTC modules can be started simultaneously to activate the entire PTC heater, otherwise, some of the operating some of the PTC modules are turned off, then the one or some of the other PTC modules are started, and then all the PTC modules can be started simultaneously to activate the entire PTC heater.

According to an implementation of the second aspect of the present invention, if it is determined that Ti is equal to or greater than T2, all the PTC modules are directly started simultaneously to activate the entire PTC heater.

According to an implementation of the second aspect of the present invention, the temperature threshold T0 has a temperature range of 0-15 degrees Celsius.

According to an implementation of the second aspect of the present invention, the PTC module has an operating time within the range of 2-180 seconds.

According to a third aspect of the present invention, a control system for performing the method according to the second aspect of the present invention is provided, wherein the control system comprises a control unit, a vehicle interior temperature measurement unit, a temperature comparison unit, and a plurality of switch units corresponding to a plurality of independently electrically controllable PTC modules, wherein each of the plurality of switch units is configured to control a respective one of the plurality of independently electrically controllable PTC modules; wherein
the vehicle interior temperature measurement unit is configured to measure a vehicle interior temperature value;
the temperature comparison unit is configured to compare the measured vehicle interior temperature value with a set temperature threshold and generate a temperature comparison result; and
the control unit is configured to control, based on the generated temperature comparison result, the turning on or off of a corresponding switch unit to start or shut down the respective PTC module.

The control system according to the third aspect of the present invention obtains the temperature comparison result by means of the vehicle interior temperature measurement unit and the temperature comparison unit and controls the corresponding switch unit to start or shut down different PTC modules by means of the control unit based on the comparison result, thereby ensuring normal activation of the PTC heater while providing a good user experience with a simple and more cost-effective control system.

According to an implementation of the third aspect of the present invention, the control system further comprises a current measurement unit configured to, when it is determined from the generated temperature comparison result that the measured vehicle interior temperature value is equal to or less than the set temperature threshold, measure an operating current of the operating PTC module and compare the measured operating current with a set current threshold to generate a current comparison result according to the total number of PTC modules; and
the control unit is further configured to control, based on the generated current comparison result, the turning on or off of a corresponding switch unit to start or shut down the respective PTC module.

According to an implementation of the third aspect of the present invention, the switch units are relays or switch circuits.

### BRIEF DESCRIPTION OF THE DRAWINGS

The present invention will be further explained below in conjunction with the accompanying drawings and embodiments. In the accompanying drawings:
FIGS. 1A and 1B are a schematic structural diagram and a schematic cross-sectional view of a portion of a roof-mounted air conditioner having a PTC heater as an example;
FIGS. 2A-2D show a first implementation of a PTC heater according to a first aspect of the present invention;
FIG. 3 is a flow chart of a method for controlling the PTC heater of the first implementation according to a second aspect of the present invention;
FIG. 4 shows a control system for performing the method for controlling the PTC heater of the first implementation according to a third aspect of the present invention;
FIGS. 5A-5D show a second implementation of a PTC heater according to a first aspect of the present invention;
FIG. 6 is a flow chart of a method for controlling the PTC heater of the second implementation according to a second aspect of the present invention; and
FIG. 7 shows a control system for performing the method for controlling the PTC heater of the second implementation according to a third aspect of the present invention;

### DETAILED DESCRIPTION

Embodiments of the present invention will be described below in detail, and examples of the embodiments are shown in the drawings, where the same or similar reference signs represent the same or similar elements or the elements having the same or similar functions. The embodiments described below with reference to the drawings are exemplary and are intended to be illustrative of the present invention, but should not be construed as limiting the present invention.

In order to make the objectives, technical solutions, and advantages of the present invention clearer and more comprehensible, the present invention is further described in detail below with reference to the accompanying drawings.

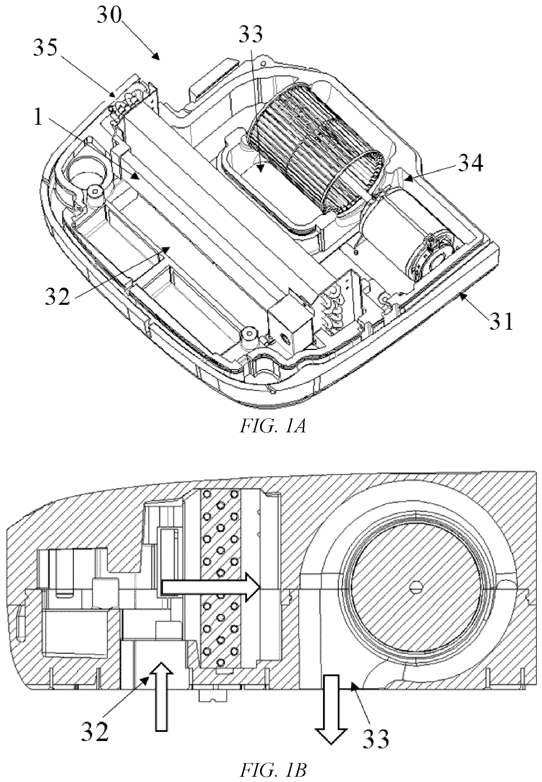

Referring to FIGS. 1A and 1B, a vehicle air conditioner having a PTC heater according to the present invention will be described by taking a roof-mounted air conditioner as an example. In particular, the roof-mounted air conditioner comprises a roof-mounted unit 30 mounted on a roof of a vehicle. The roof-mounted unit comprises a chassis 31, which comprises an air inlet 32 and an air outlet 33. The PTC heater 1 is arranged on the chassis 31 between the air inlet 32 and the air outlet 33. The roof-mounted unit 30 further comprises a fan 34. When a heating function is activated, under the function of the fan, air from the interior of the vehicle enters the roof-mounted unit from the air inlet, passes through the PTC heater and is then discharged from the air outlet back to the interior of the vehicle (i.e. the fan forms an air passage). While running the heating function, there may be two different heating operations: one is that only the PTC heater operates while other parts (such as a heat exchanger 35) of the roof-mounted unit do not participate in the heating process; and the other is that the PTC heater operates together with the heat exchanger 35 located behind it to jointly participate in the heating process (in a heat pump air conditioning form). In addition, since the air from the interior of the vehicle is directed through the PTC heater and the vehicle interior temperature is also substantially similar to the temperature outside the vehicle before the heating function is activated, the ambient temperature inside the vehicle may be considered to be the ambient temperature at which the PTC heater is located to some extent.

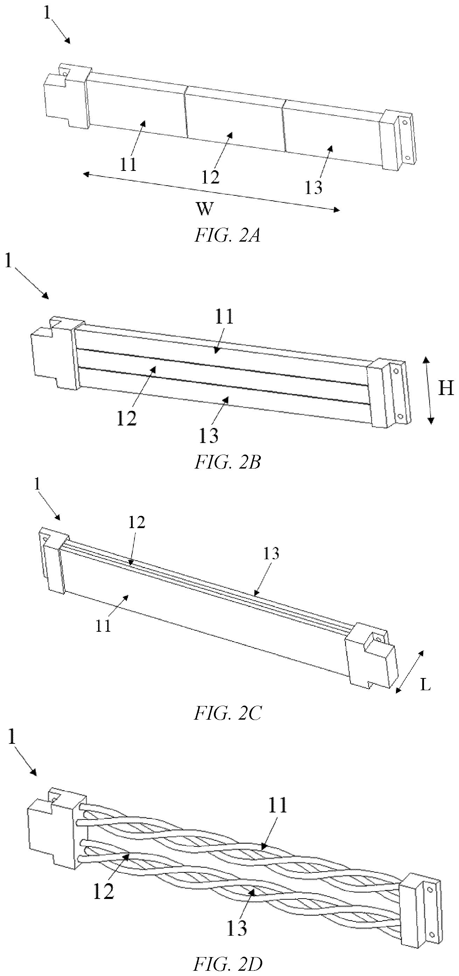

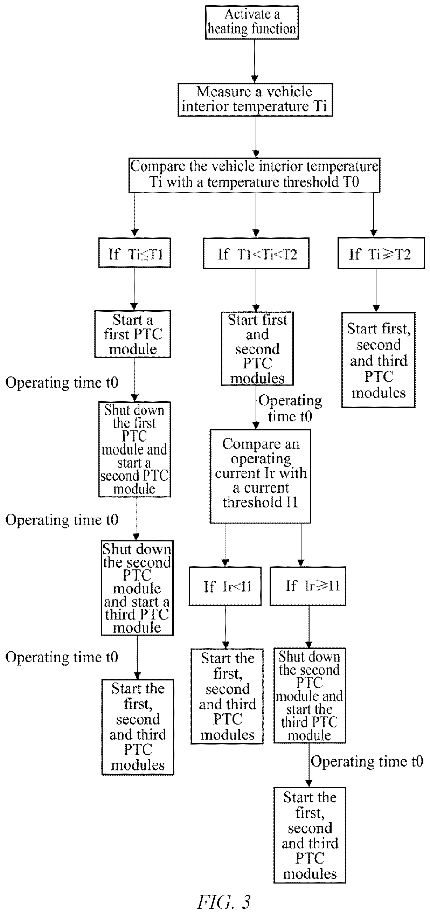

The PTC heater and the control method and control system thereof according to the present invention will be described below with reference to the first implementation shown in FIGS. 2A-2D, 3 and 4. The number of PTC modules is related to the total heating power of the PTC heater 1. In the first implementation, as an example, the total heating power is 1500 W, there are thus provided three PTC modules 11, 12 and 13 each having substantially 500 W, and a supply voltage of about 220 V is provided. In this implementation, the normal operating current of the entire PTC heater may be, for example, in the range of about 6-7 A, and the protection current may be set, for example, to about 8 A. When the heating function of the PTC heater of this implementation is activated, the control system 20 may measure a vehicle interior temperature value Ti by means of its vehicle interior temperature measurement unit 21, then compare the measured vehicle interior temperature value Ti with a set temperature threshold T0 (e.g., T0 may be a temperature range having a lower bound value T1 and an upper bound value T2, such as in the range of 0°C-15°C) by means of a temperature comparison unit 22 of the control system, and generate a temperature comparison result.

If it is determined that the vehicle interior temperature Ti is equal to or less than the lower bound value T1 (e.g., 0°C) of the temperature threshold, the control unit 23 of the control system first controls a switch unit 24 (which may be a relay or a switch circuit, for example) to turn on so as to start a first PTC module 11 according to the temperature comparison result Ti ≤ T1. After the first PTC module 11 operates for a period of time t0 (which may be selected to be about 60 seconds, for example), the control unit 23 controls the switch unit 24 to turn off so as to shut down the first PTC module 11, and then controls a switch unit 25 to turn on so as to start a second PTC module 12. After the second PTC module 12 operates for the period of time t0, the control unit 23 controls the switch unit 25 to turn off so as to shut down the first PTC module 12, and then controls a switch unit 26 to turn on so as to start a third PTC module 13. After the third PTC module 13 operates for the period of time t0, the control unit 23 controls the switch units 24 and 25 to turn on so as to start the first PTC module and the second PTC module, thereby achieving simultaneous starting of all the PTC modules 11-13 to activate the entire PTC heater. Under the extremely low ambient temperature conditions (e.g., harsh conditions below 0°C), the total cold start current of the PTC heater with a total heating power of 1500 W may increase to about 10-12A, possibly even double the conventional operating current (that is, direct starting will cause the product to shut down for protection and fail to start normally). In this implementation, during the starting process, the first PTC module, the second PTC module and the third PTC module are first separately started (so that the current is reduced to avoid the protection shutdown of the PTC heater caused by excessive current during cold startup, the heating and comfort requirements in the vehicle can also be guaranteed to some extent, and each PTC module itself is preheated), and then all the PTC modules are started simultaneously (due to the preheating of each module, the current is reduced and does not exceed the set protection current) to ensure the normal starting of the PTC heater under the extremely low temperature conditions. Therefore, this implementation achieves a reduction in starting current with a simple and more cost-effective PTC structure and the control method and system thereof, to ensure normal activation of the PTC heater while providing a good user experience.

If it is determined that the vehicle interior temperature Ti is less than the upper bound value T2 (e.g., 15°C) and greater than the lower bound value T1 (e.g., 0°C) of the temperature threshold, the control unit 23 of the control system first controls the switch unit 24 and the switch unit 25 to turn on so as to start the first PTC module 11 and the second PTC module 12 according to the temperature comparison result T1 < Ti < T2. After the first and second PTC modules operate for a period of time t0 (which may be selected to be about 60 seconds, for example), a current measurement unit 27 of the control system measures the operating current Ir of the first and second PTC modules and compares the measured operating current Ir with a set current threshold I1 (which may be selected substantially in the range of 4.5A to 5.5A, for example). If it is determined that Ir < I1, the control unit 23 controls the switch unit 26 to turn on so as to start the third PTC module 13 according to the current comparison result Ir < I1, thereby achieving simultaneous starting of all the PTC modules 11-13 to activate the entire PTC heater. If it is determined that Ir ≥ I1, the control unit 23 controls the switch unit 25 to turn off so as to shut down the second PTC module 12 and then controls the switch unit 26 to turn on so as to start the third PTC module 13 according to the current comparison result Ir ≥ I1. After the first and third PTC modules operate for a period of time t0 (which may be selected to be about 60 seconds, for example), the control unit 23 controls the switch unit 25 to turn on so as to start the second PTC module 12 again, thereby achieving simultaneous starting of all the PTC modules 11-13 to activate the entire PTC heater. Under the relatively low but mild ambient temperature conditions (e.g., between 0°C and 15°C), although the total cold start current of the PTC heater with a total heating power of 1500 W is reduced relative to the foregoing case, direct starting may still cause the product to shut down for protection and fail to start normally, or there is such a risk. In this implementation, during the starting process, some of the modules, for example the first and second modules, are started first (so that the current is reduced to avoid the protection shutdown of the PTC heater that may be caused during cold startup, the heating and comfort requirements in the vehicle can also be guaranteed, and the respective PTC modules themselves are preheated), and it is then determined, based on the determination of the current operating current, that all the PTC modules are started simultaneously (shortening the starting process to some extent) or that one of the modules is shut down and the third module is turned on, and then all the PTC modules are started (due to the preheating of at least some of the modules, the current is reduced and does not exceed the set protection current) to ensure the normal starting of the PTC heater under the relatively low temperature conditions. Therefore, this implementation achieves a reduction in starting current with a simple and more cost-effective PTC structure and the control method and system thereof, to ensure normal activation of the PTC heater while providing a good user experience.

If it is determined that the vehicle interior temperature Ti is equal to or greater than the upper bound value T2 (e.g., 15°C) of the temperature threshold, the control unit 23 of the control system controls the switch units 24, 25 and 26 to turn on together so as to simultaneously start the first, second and third PTC modules to directly activate the entire PTC heater according to the temperature comparison result Ti ≥ T2. Under the relatively high ambient temperature conditions (e. g., above 15°C), the resistance value of the PTC heater is ideal, and this implementation can choose to skip the preheating process and directly start the PTC heater with a total heating power of 1500 W.

FIGS. 2A-2D specifically show optional arrangements/combinations of the three PTC modules according to the first implementation of the present invention. For example, as shown in FIG. 2A, the first PTC module 11, the second PTC module 12 and the third PTC module 13 may be arranged in sequence in the transverse direction W in a substantially block-like form. As shown in FIG. 2B, the first PTC module 11, the second PTC module 12 and the third PTC module 13 may be arranged in sequence in the vertical direction H in a substantially block-like form. As shown in FIG. 2C, the first PTC module 11, the second PTC module 12 and the third PTC module 13 may be arranged in sequence in the longitudinal direction L in a substantially block-like form. Alternatively, as shown in FIG. 2D, the first PTC module 11, the second PTC module 12 and the third PTC module 13 may extend in the transverse direction W in a substantially spiral form. In the configuration as shown in FIG. 2C, the individual PTC modules are arranged one behind the other, and the contact area between the individual modules is thus relatively large/increased. When one or two of the PTC modules are selected to be started first according to the temperature comparison result, in addition to increasing its own temperature due to operation and thus reducing the operating current, the heat generated by the operating PTC module can also provide additional preheating (i.e. heat exchange) for a non-operating PTC module (due to the increase in the contact area therebetween), so that when starting the previously non-operating PTC module, the current will be reduced and may even be close to the normal operating value, thereby reducing the time required for the starting process to some extent and making it more efficient. In the configuration as shown in FIG. 2D, each PTC module is substantially spiral such that there are a plurality of contact regions in the width direction W between the PTC modules due to the respective spiral extension, thereby increasing the contact area between the PTC modules 11-13 to enable heat exchange therebetween, and reducing the time required for the starting process to some extent and making it more efficient.

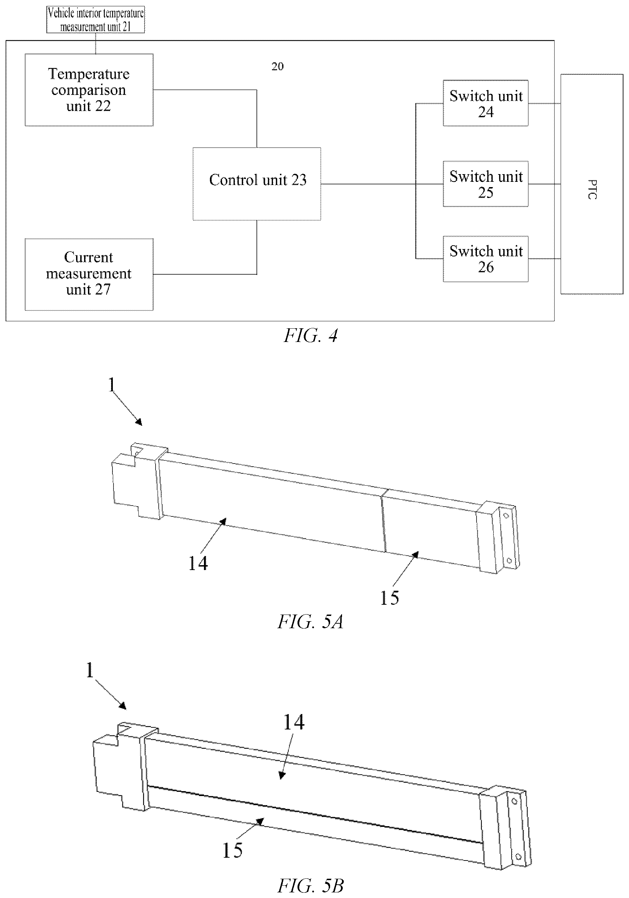

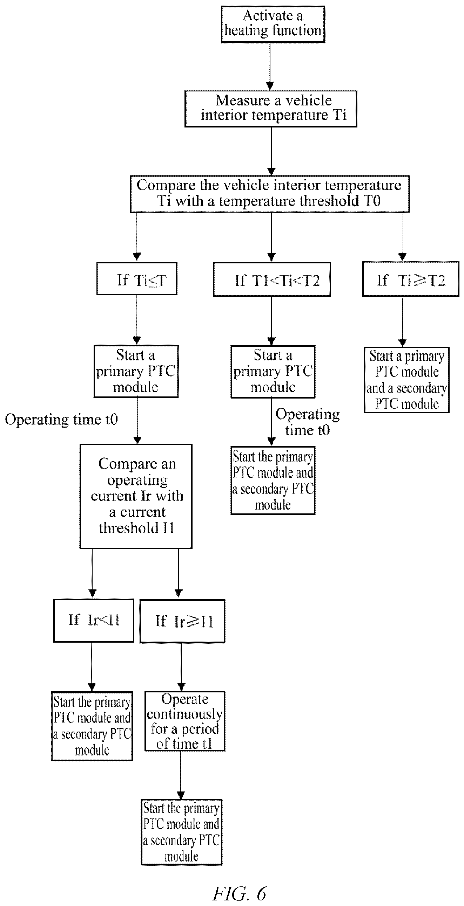

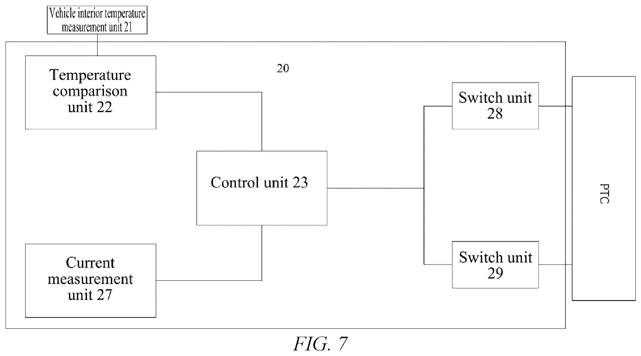

The PTC heater and the control method and control system thereof according to the present invention will be described below with reference to the second implementation shown in FIGS. 5A-5D, 6 and 7. The number of PTC modules is related to the total heating power of the PTC heater 1. In the second implementation, the total heating power is 1000 W and is divided into different partial powers, one of which is about 700 W and the other is about 300 W, and a supply voltage of about 220 V is provided. In this implementation, the normal operating current of the entire PTC heater may be, for example, about 5 A, and the protection current may be, for example, in the range of about 6-7 A. When the heating function of the PTC heater of this implementation is activated, the control system 20 may measure a vehicle interior temperature value Ti by means of its vehicle interior temperature measurement unit 21, then compare the measured vehicle interior temperature value Ti with a set temperature threshold T0 (e.g., T0 may be a temperature range having a lower bound value T1 and an upper bound value T2, such as in the range of 0°C-15°C) by means of a temperature comparison unit 22 of the control system, and generate a temperature comparison result.

If it is determined that the vehicle interior temperature Ti is equal to or less than the lower bound value T1 (e.g., 0°C) of the temperature threshold, the control unit 23 of the control system first controls a switch unit 28 (which may be a relay or a switch circuit, for example) to turn on so as to start a primary PTC module 14 (which may be a first PTC module, for example) having a heating power of about 700 W according to the temperature comparison result Ti ≤ T1. After the primary PTC module operates for a period of time t0 (which may be selected to be about 60 seconds, for example), the current measurement unit 27 of the control system measures the operating current Ir of the primary PTC module and compares the measured operating current Ir with a set current threshold I1 (which may be about 4 A, for example). If it is determined that Ir < I1, the control unit 23 controls a switch unit 29 to turn on so as to start a secondary PTC module 15 (which may be a second PTC module, for example) according to the current comparison result Ir < I1, thereby achieving simultaneous starting of all the PTC modules 14 and 15 to activate the entire PTC heater. If it is determined that Ir ≥ I1 , the control unit 23 controls the switch unit 28 to extend the turning-on time so as to cause the primary PTC module to further operate for a period of time t1 (which may for example be in the range of 60-120 seconds) according to the current comparison result Ir ≥ I1, and the control unit 23 then controls the switch unit 29 to turn on so as to start the secondary PTC module to activate the entire PTC heater. Under the extremely low ambient temperature conditions (e.g., below 0°C), the total cold start current of the PTC heater with a total heating power of 1000 W may increase to about 8-10A (that is, direct starting will cause the product to shut down for protection and fail to start normally). In this implementation, during the starting process, the primary PTC module is first started (so that the current is reduced to avoid the protection shutdown of the PTC heater caused by excessive current during cold startup, and the heating and comfort requirements in the vehicle can also be guaranteed to some extent), and after it is determined according to the operating current that the primary PTC heater has been sufficiently preheated, the secondary PTC module is started to activate both the PTC modules (due to the sufficient preheating of the primary module, the current is reduced and does not exceed the set protection current) to ensure the normal starting of the PTC heater under the relatively low temperature conditions. Therefore, this implementation achieves a reduction in starting current with a simple and more cost-effective PTC structure and the control method and system thereof, to ensure normal activation of the PTC heater while providing a good user experience.

If it is determined that the vehicle interior temperature Ti is less than the upper bound value T2 (e.g., 15°C) and greater than the lower bound value T1 (e.g., 0°C) of the temperature threshold, the control unit 23 of the control system first controls the switch unit 28 to turn on so as to start the primary PTC module 14 (which may be the first PTC module, for example) having a heating power of about 700 W according to the temperature comparison result T1 < Ti < T2. After the primary PTC module operates for a period of time t0 (which may be selected to be about 60 seconds, for example), the control unit 23 controls the switch unit 29 to turn on so as to start the secondary PTC module 15 to activate the entire PTC heater. Under the relatively low but mild ambient temperature conditions (e.g., between 0°C and 15°C), although the total cold start current of the PTC heater with a total heating power of 1000 W is reduced relative to the foregoing case, direct starting may still cause the product to shut down for protection and fail to start normally, or there is such a risk. In this implementation, during the starting process, the primary PTC module having a heating power of about 700 W is started first (so that the current is reduced to avoid the protection shutdown of the PTC heater that may be caused during cold startup, the heating and comfort requirements in the vehicle can also be guaranteed, and the respective PTC module itself is preheated), and then the secondary PTC module is started, thereby starting both the PTC modules simultaneously (shortening the starting process to some extent), to ensure the normal starting of the PTC heater under the relatively low temperature conditions. Therefore, this implementation achieves a reduction in starting current with a simple and more cost-effective PTC structure and the control method and system thereof, to ensure normal activation of the PTC heater while providing a good user experience.

If it is determined that the vehicle interior temperature Ti is equal to or greater than the upper bound value T2 (e.g., 15°C) of the temperature threshold, the control unit 23 of the control system controls the switch units 28 and 29 to turn on together so as to simultaneously start the primary and secondary PTC modules to directly activate the entire PTC heater according to the temperature comparison result Ti ≥ T2. Under the relatively high ambient temperature conditions (e. g., above 15°C), the resistance value of the PTC heater is ideal, and this implementation can choose to skip the preheating process and directly start the PTC heater with a total heating power of 1000 W.

In the above second implementation of the present invention, the 7 : 3 ratio of the primary power to the secondary power ensures that the primary PTC module can still be started and operate in harsh low temperature environments, and also ensures that the heating energy loss during starting is small, thereby improving the starting efficiency. It should be understood that in an implementation in which there are two modules, a division method similar to that of the first implementation (i.e., each partial power being 500 W) may be used.

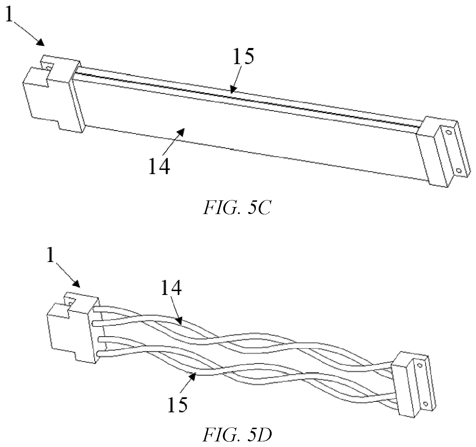

FIGS. 5A-5D specifically show optional arrangements/combinations of the two PTC modules according to the second implementation of the present invention. The particular arrangements between the PTC modules shown in FIGS. 5A-5D are substantially the same as the arrangements shown in FIGS. 2A-2D, and will not be repeated herein. It should also be understood that the configurations shown in FIGS. 5C and 5D also increase the contact area between the PTC modules 14 and 15 to enable heat exchange therebetween, thereby reducing the time required for the starting process to some extent and making it more efficient.

The PTC heater and the control method and system thereof according to the present invention achieve the objective of reducing the starting current by means of segmented/modular starting control and preheating control (during the entire starting process, the modular starting control enables the cold start current to be reduced, and then the preheating control enables the starting current to be reduced when all the modules are started simultaneously), so that the PTC heater can be started efficiently without protection. The segmented/modular starting control and preheating control in the present invention can even reduce the start current by half compared with directly cold starting the entire PTC heater at a low temperature.

While the present invention has been described above in the implementations in which three modules and two modules are provided by taking the roof-mounted air conditioner as an example, it should be understood that the present invention can also be used in other types of vehicle/onboard air conditioners and use four or even more modules, and the corresponding control method and system are similar to those using three modules. For example, each of the modules is sequentially started individually or some of the modules are started alternately, and it is also possible to use substantially the same partial power or different partial powers.

Furthermore, it should also be understood that the above reference to the parameters such as power, current, temperature, time and supply voltage is merely exemplary, and is intended to provide an illustrative description of the present invention. These parameters may also be selected in different numerical ranges depending on the actual situation. For example, the supply voltage may be 110 V in different use environments, and the other parameters may be adjusted accordingly depending on the actual supply voltage. In addition, if a high ambient temperature (e.g., closer to the upper bound value) is measured and/or there is an increased heat exchange area between the PTC modules, a reduced modular operating time/preheating time can be selected accordingly. For example, the modular operating time/preheating time may be selected to be about 30 seconds, or even about 2 seconds. In the description of the present invention, it should be understood that, the terms "first", "second", and "third" are used for descriptive purposes only, and should not be construed as indicating or implying the relative importance and/or sequence. For example, the second or/and third PTC module may be selected to be started first, or the primary PTC module may be marked as the second PTC module, and so on.

Although the embodiments of the present invention have been shown and described above, it can be understood that the above embodiments are merely exemplary and should not be construed as limiting the present invention. Those of ordinary skill in the art may make combinations, changes, modifications, replacements, and variations to the above embodiments within the scope of the present invention.

## Claims

1. A PTC heater for use in a vehicle air conditioner, **characterized in that** the PTC heater comprises a plurality of independently electrically controllable PTC modules, to enable selectively:
directly starting all the PTC modules simultaneously to activate the entire PTC heater; or
starting the operation of one or some of the PTC modules before all the PTC modules are started simultaneously to activate the entire PTC heater.

2. The PTC heater according to claim 1, **characterized in that** the number of modules of the PTC heater depends on the total power of the PTC heater, and a partial power of each PTC module is substantially the same or different.

3. The PTC heater according to claim 1 or 2, **characterized in that** the starting of the operation of each PTC module is controlled by a corresponding switch unit.

4. The PTC heater according to claim 1 or 2, **characterized in that** the combination of the plurality of PTC modules comprises: a combination in which the PTC modules are arranged in sequence in a transverse direction in a substantially block-like form, a combination in which the PTC modules are arranged in sequence in a vertical direction in a substantially block-like form, a combination in which the PTC modules are arranged in sequence in a longitudinal direction in a substantially block-like form, or the PTC modules extending in the transverse direction in a substantially spiral form.

5. The PTC heater according to claim 1 or 2, **characterized in that** when the vehicle air conditioner is running a heating function, only the PTC heater is operated alone or the PTC heater is operated in conjunction with a heat exchanger in the vehicle air conditioner.

6. A method for controlling a PTC heater of any one of claims 1 to 5, **characterized by** comprising:
measuring a vehicle interior temperature value Ti;
comparing the measured vehicle interior temperature value Ti with a set temperature threshold T0; and
starting the operation of one or some of PTC modules before all the PTC modules are started simultaneously to activate the entire PTC heater if the measured vehicle interior temperature value Ti is determined to be equal to or less than the set temperature threshold T0.

7. The method according to claim 6, **characterized in that** the temperature threshold is a temperature range with a lower bound value T1 and an upper bound value T2.

8. The method according to claim 7, **characterized in that** if it is determined that Ti is equal to or less than T1:
where there are two PTC modules, one of the PTC modules is started and then operates for a period of time, and then it is determined whether the other PTC module can be started based on the operating current of the PTC module, if so, the other PTC module can be started to start both the PTC modules simultaneously to activate the entire PTC heater, otherwise, the other PTC module is started after the PTC module is further operated for a period of time, to start both the PTC modules simultaneously to activate the entire PTC heater; and
where there are at least three PTC modules, after each of the PTC modules is sequentially started individually and then operates for a period of time, all the PTC modules are started simultaneously to activate the entire PTC heater.

9. The method according to claim 7, **characterized in that** if it is determined that Ti is less than T2 and greater than T1:
where there are two PTC modules, one of the PTC modules is started and then operates for a period of time, and then the other PTC module is started to start both the PTC modules simultaneously to activate the entire PTC heater; and
where there are at least three PTC modules, some of the PTC modules are started and then operate for a period of time, and then it is determined whether one or some of the other PTC modules can be started based on the operating current of the some of the PTC modules, if so, the one or some of the other PTC modules can be started, and then all the PTC modules can be started simultaneously to activate the entire PTC heater, otherwise, some of the operating some of the PTC modules are turned off, then the one or some of the other PTC modules are started, and then all the PTC modules can be started simultaneously to activate the entire PTC heater.

10. The method according to claim 7, **characterized in that** if it is determined that Ti is equal to or greater than T2, all the PTC modules are directly started simultaneously to activate the entire PTC heater.

11. The method according to any one of claims 6-10, **characterized in that** the temperature threshold has a temperature range of 0-15 degrees Celsius.

12. The method according to any one of claims 6-10, **characterized in that** the PTC module has an operating time within the range of 2-180 seconds.

13. A control system for performing method according to any of claims 6-12, **characterized in that** the control system comprises a control unit, a vehicle interior temperature measurement unit, a temperature comparison unit, and a plurality of switch units corresponding to a plurality of independently electrically controllable PTC modules, wherein each of the plurality of switch units is configured to control a respective one of the plurality of independently electrically controllable PTC modules; wherein
the vehicle interior temperature measurement unit is configured to measure a vehicle interior temperature value;
the temperature comparison unit is configured to compare the measured vehicle interior temperature value with a set temperature threshold and generate a temperature comparison result; and
the control unit is configured to control, based on the generated temperature comparison result, the turning on or off of a corresponding switch unit to start or shut down the respective PTC module.

14. The control device according to claim 13, **characterized in that** the control system further comprises a current measurement unit configured to, when it is determined from the generated temperature comparison result that the measured vehicle interior temperature value is equal to or less than the set temperature threshold, measure an operating current of the operating PTC module and compare the measured operating current with a set current threshold to generate a current comparison result according to the total number of PTC modules; and
the control unit is further configured to control, based on the generated current comparison result, the turning on or off of a corresponding switch unit to start or shut down the respective PTC module.

15. The control device according to claim 13 or 14, **characterized in that** the switch units are relays or switch circuits.
